# FASCICULE DE BREVET EUROPEEN

(11) **EP 4 214 101 B1**
(45) Date de publication et mention de la délivrance du brevet: **15.10.2025**
(21) Numéro de dépôt: 21751603.8
(22) Date de dépôt: 05.07.2021
(51) Int. Cl.: B60W 30/16, B60W 60/00

(54) **PROCÉDÉ ET DISPOSITIF DE CONDUITE AUTONOME D'UN VÉHICULE TERRESTRE À MOTEUR**
AUTONOMES FAHRVERFAHREN UND VORRICHTUNG FÜR EIN MOTORISIERTES LANDFAHRZEUG
AUTONOMOUS DRIVING METHOD AND DEVICE FOR A MOTORIZED LAND VEHICLE

(30) Priorité: 21.09.2020 FR 2009547
(43) Date de publication de la demande: 26.07.2023
(73) Titulaire: Stellantis Auto SAS, 78300 Poissy (FR)
(72) Inventeur: VIVET, Luc, 75016 PARIS 16 (FR); TOUIL, Lhassane, Kenitra, 14000 (MA)
(74) Mandataire: ESIP
(86) Numéro de dépôt international: PCT/FR2021/051225
(87) Numéro de publication internationale: WO 2022/058666

(56) Documents cités:
- EP-A1- 2 562 060
- WO-A1-2020/120868
- FR-A1- 3 092 547

## Description

La présente invention revendique la priorité de la demande française 2009547 déposée le 21.09.2020.

L'invention concerne un procédé et dispositif de conduite autonome d'un véhicule terrestre à moteur, appelé égo-véhicule, par régulation de vitesse adaptative fondée sur une vitesse cible.

Il est connu qu'un égo-véhicule, notamment automobile, comprend une fonction de régulation de vitesse véhicule. L'égo-véhicule comporte des organes qui, après activation de la fonction de régulation de vitesse véhicule et détermination d'une vitesse cible, notamment par un conducteur, sont aptes à faire avancer à la vitesse cible le véhicule de manière autonome, sans action particulière du conducteur. Cette régulation est désactivée par le conducteur lorsqu'il détecte un obstacle ou un véhicule plus lent devant lui.

L'égo-véhicule peut comprendre des moyens (radar, caméra, ...) configurés pour détecter des véhicules le précédant (le devançant). Un véhicule détecté est aussi dit véhicule cible. Ces moyens sont également aptes à déterminer une information de mouvement du véhicule cible. Par exemple, une information de mouvement comprend une position, une vitesse et/ou une accélération absolue ou relative par rapport à l'égo-véhicule, associées ou non à des éléments d'identification et de reconnaissance du véhicule cible. Les éléments d'identification et de reconnaissance du véhicule cible peuvent être la forme, la plaque minéralogique, ou tous attributs du véhicule cible (classe, ...). Ainsi une information de mouvement rend possible de différencier, identifier de manière unique, chaque véhicule détecté. L'accélération est positive ou négative, elle comprend donc les décélérations.

Il est connu de réguler la vitesse du véhicule de manière adaptative en fonction de l'information de mouvement des véhicules détectés. Cette régulation de vitesse est fondée sur le calcul d'une consigne de conduite autonome. Cette consigne de conduite autonome peut être une position cible, une distance cible, une vitesse cible, une accélération cible et/ou toute autre dérivée énième par rapport au temps de la position. Ces cibles sont temporairement adaptées afin de maintenir une distance minimum entre l'égo-véhicule et le véhicule détecté, ou un temps de trajet entre l'égo-véhicule et le véhicule cible, par exemple 2 secondes. On entend par systèmes de régulation de vitesse adaptative, ces moyens aptes à réguler la vitesse de l'égo-véhicule de manière adaptative.

Certain de ces systèmes de régulation de vitesse adaptative peuvent arrêter (vitesse nulle) l'égo véhicule si le véhicule cible est arrêté, puis redémarrer et faire avancer l'égo véhicule lorsque le véhicule cible avance de nouveau. Ce sont des systèmes dits « Stop & Go ».

On connait par le document WO2020120868 A1 une conduite autonome sécurisé en cas de détection d'un véhicule cible.

Malheureusement, la détection du véhicule cible est parfois défaillante et ceci principalement en virage, en pente, lors de roulage sur des ralentisseurs, et aussi lors d'un arrêt. Lors des pertes de détection du véhicule cible, il existe plusieurs solutions. Une première solution connue est de réguler la vitesse de l'égo véhicule à sa vitesse cible, vitesse prédéterminée, par exemple par le conducteur, et qui n'est pas liée à la vitesse du véhicule cible. Si la vitesse actuelle de l'égo véhicule est très inférieure à la vitesse du véhicule cible, cela entraine de fortes accélérations mal ressenties par le conducteur et les passagers de l'égo véhicule. Egalement, le conducteur et les passagers ne comprennent pas ces variations d'accélérations s'ils peuvent voir que le véhicule cible est proche. Une deuxième solution connue est de maintenir constante la vitesse de l'égo véhicule pendant une durée prédéterminée. Si le véhicule cible, dont on perd la détection, est en phase de décélération, il va se retrouver très proche de l'égo véhicule lorsqu'on détecte à nouveau le véhicule cible. Ceci va obliger le conducteur de l'égo-véhicule à reprendre la main et de freiner l'égo véhicule.

Un objet de la présente invention est de remédier aux problèmes connus lors de pertes de détection du véhicule cible, améliorant ainsi la sécurité et le confort des usagers de l'égo véhicule.

A cet effet, un premier aspect de l'invention concerne un procédé de conduite autonome d'un véhicule terrestre à moteur, appelé égo-véhicule, par régulation de vitesse adaptative fondée sur une vitesse cible. Le procédé comporte les étapes de :
- détermination d'une information de mouvement d'un premier véhicule cible ;
- détermination d'une vitesse de l'égo-véhicule ;
- calcul d'un indicateur de pertinence pour le premier véhicule cible configuré pour caractériser une probabilité de présence du premier véhicule cible ;
- sur détection d'une perte de détection du premier véhicule cible et si l'indicateur de pertinence est supérieur à une valeur de désélection prédéterminée, calcul d'une consigne de conduite autonome à partir de l'information de mouvement, de la vitesse cible et de la vitesse de l'égo-véhicule.

Ainsi, on maintient un mouvement (position, vitesse, accélération) de l'égo-véhicule compatible avec le mouvement du premier véhicule cible avant la perte de détection. Par exemple, si le premier véhicule cible était en train de décélérer avant la perte de détection, la régulation de vitesse de l'égo véhicule va continuer à décélérer l'égo véhicule. Lorsque nous détecterons à nouveau le premier véhicule cible, la distance, ou le temps avant impact, sera beaucoup plus grande que si la régulation de vitesse maintient constante la vitesse de l'égo véhicule pendant la perte de détection du premier véhicule cible. Ceci améliore sensiblement la sécurité. Ceci améliore également le sentiment de confort pour les usagers de l'égo-véhicule en évitant, lorsque le véhicule cible sera à nouveau détecté, soit une très forte décélération de l'égo-véhicule par le système de régulation de vitesse soit une reprise en main brusque par le conducteur et de freiner fortement l'égo véhicule.

Selon l'invention, l'étape, sur détection d'une perte de détection du premier véhicule cible et si l'indicateur de pertinence est supérieur à une valeur de désélection prédéterminée, de calcul d'une consigne de conduite autonome à partir de l'information de mouvement, de la vitesse cible et de la vitesse de l'égo-véhicule comporte les sous-étapes de :
- détection de la perte de détection du premier véhicule cible ;
- mise à jour de l'indicateur de pertinence à partir d'une durée passée depuis la dernière détection du premier véhicule ;
- si l'indicateur de pertinence mis à jour est supérieur à la valeur de désélection prédéterminée, calcul d'une consigne de conduite autonome à partir de l'information de mouvement, de la vitesse cible et de la vitesse de l'égo-véhicule.

Ainsi, l'indicateur de pertinence est mis à jour régulièrement tant que le premier véhicule cible n'est plus détecté. Tant que cet indicateur est supérieur à la valeur de désélection prédéterminée, la probabilité de présence du premier véhicule cible est forte. La consigne de conduite autonome rend toujours encore en compte les dernières informations de mouvement du premier véhicule cible connues. Le système de régulation de vitesse fait comme si le premier véhicule cible est toujours présent. En cas de nouvelle détection du premier véhicule cible, les variations d'accélération de l'égo-véhicule seront moins brutales améliorant sensiblement le confort des usagers de l'égo-véhicule.

Selon l'invention, le procédé comporte en outre les étapes de :
- détermination d'une information de mouvement d'un deuxième véhicule cible ;
- calcul d'un indicateur de pertinence pour le deuxième véhicule cible configuré pour caractériser une probabilité de présence du deuxième véhicule cible ;
- détermination une distance entre l'ego-véhicule et le deuxième véhicule ;
- détermination une distance entre l'ego-véhicule et le premier véhicule ;
- si l'indicateur de pertinence pour le deuxième véhicule cible est supérieur à une valeur de sélection prédéterminée et si distance entre l'ego-véhicule et le deuxième véhicule est plus petite que la distance entre l'ego-véhicule et le premier véhicule, calcul d'une consigne de conduite autonome à partir de l'information de mouvement du deuxième véhicule de la vitesse cible et de la vitesse de l'égo-véhicule.

Ainsi, l'invention prend en compte l'insertion d'un deuxième véhicule entre l'égo-véhicule et le premier véhicule cible et adapte, si besoin, la consigne de conduite autonome en fonction de l'information de mouvement du deuxième véhicule cible.

En virage, il est connu de perdre la détection du premier véhicule cible et de détecter un autre véhicule, dit deuxième véhicule cible, sur une voie adjacente. Le calcul de la consigne de conduite autonome ne prend pas en compte l'information de mouvement du deuxième véhicule cible si ce deuxième véhicule cible plus éloigné que le premier véhicule cible. Dans un mode de réalisation, l'indicateur de pertinence du deuxième véhicule est nul, ou très faible, si ce deuxième véhicule cible est sur une autre voie.

Avantageusement, le procédé comporte en outre les étapes de :
- détermination d'une information de mouvement d'un deuxième véhicule cible ;
- calcul d'un indicateur de pertinence pour le deuxième véhicule cible configuré pour caractériser une probabilité de présence du deuxième véhicule cible ;
- si l'indicateur de pertinence pour le deuxième véhicule cible est supérieur à l'indicateur de pertinence mise à jour pour le premier véhicule cible, calcul d'une consigne de conduite autonome à partir de l'information de mouvement du deuxième véhicule de la vitesse cible et de la vitesse de l'égo-véhicule.

Ainsi, en cas de détection d'un deuxième véhicule cible, le calcul de la consigne de conduite autonome prend en compte l'information de mouvement du véhicule cible le plus probable.

Avantageusement, la mise à jour de l'indicateur de pertinence est calculée à partir du temps passé depuis la dernière détermination de l'information de mouvement du premier véhicule, le calcul étant fondé sur une fonction polynomiale.

Ainsi, l'évolution temporelle de l'indicateur de pertinence est apte à approximer et à évoluer selon de nombreuses formes de courbe temporelle sans complexifier les calculs. A titre d'illustration, la fonction polynomiale peut prendre comme argument le temps passé depuis la dernière détection.

Avantageusement, la mise à jour de l'indicateur de pertinence fait décroitre l'indicateur de pertinence à chaque mise à jour d'une valeur prédéterminée caractérisant un taux de décroissance.

Dans un mode de réalisation, chaque mise à jour est réalisée périodiquement selon un pas de temps fixé. Ainsi, l'évolution temporelle de l'indicateur de pertinence décroit linéairement par rapport au temps à chaque mise à jour. Cette évolution consomme peu de ressources de calcul (nombre d'instructions du processeur, mémoire).

Avantageusement, le procédé comporte en outre une étape, sur détection d'une perte de détection du premier véhicule cible et si l'indicateur de pertinence est inférieur à la valeur de désélection prédéterminée, de calcul d'une consigne de conduite autonome à partir uniquement de la vitesse cible et de la vitesse de l'égo-véhicule.

Lorsque l'indicateur de pertinence est inférieur à la valeur de désélection prédéterminée, le procédé ne prend plus en compte les informations du premier véhicule cible. Cela rend également possible le retour à un fonctionnement de régulation de vitesse adaptative connues.

Un deuxième aspect de l'invention concerne un dispositif comprenant une mémoire associée à au moins un processeur configuré pour mettre en œuvre le procédé selon le premier aspect de l'invention.

L'invention concerne aussi un véhicule terrestre à moteur comportant le dispositif.

L'invention concerne aussi un programme d'ordinateur comprenant des instructions adaptées pour l'exécution des étapes du procédé lorsque ledit programme est exécuté par au moins un processeur.

D'autres caractéristiques et avantages de l'invention ressortiront de la description des modes de réalisation non limitatifs de l'invention ci-après, en référence aux figures annexées, sur lesquelles :
[Fig. 1] illustre schématiquement un égo-véhicule et un premier véhicule cible selon un exemple de réalisation particulier de la présente invention.
[Fig. 2] illustre schématiquement un procédé de conduite autonome d'un véhicule terrestre à moteur, appelé égo-véhicule, par régulation de vitesse adaptative fondée sur une vitesse cible, selon un exemple particulier de réalisation de la présente invention.
[Fig. 3] illustre schématiquement un dispositif, selon un exemple particulier de réalisation de la présente invention.

L'invention est décrite ci-après dans son application, non limitative, au cas d'un véhicule automobile autonome circulant sur une route. D'autres applications telles qu'un robot dans un entrepôt de stockage ou encore une motocyclette sur une route de campagne sont également envisageables.

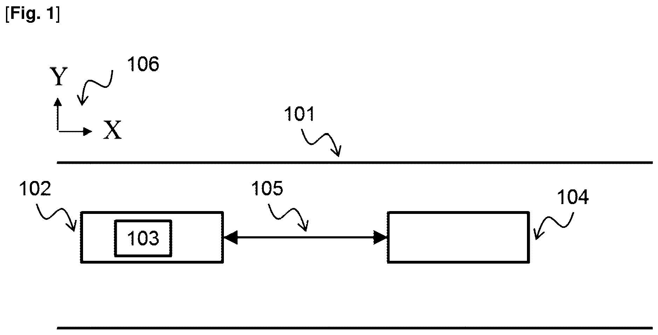

La figure 1 montre schématiquement une route 101 sur laquelle circule un égo-véhicule 102 et un premier véhicule cible 104. L'égo-véhicule 102 comporte des moyens et organes 103 aptes à mettre en œuvre l'invention.

L'égo-véhicule 102 peut comporter un poste de conduite constitué, par exemple, d'un fauteuil, d'un volant, de pédales (d'accélération, de freinage, d'embrayage), d'un tableau de bord. Ledit tableau de bord peut comporter un cockpit, un système multimédia apte à afficher des informations audio-visuelles, un système d'affichage tête haute et/ou un système de climatisation/ventilation.

Selon un mode de réalisation le volant et/ou le tableau de bord comportent au moins un boitier, commodo, qui regroupe différentes commandes d'un véhicule automobile : klaxon, clignotant, essuie-glace, feux de route, feux de croisement, feux de position, activation/désactivation d'aides à la conduite comme, par exemple, un régulateur de vitesse adaptatif, réglages et ou de paramétrage d'aides à la conduite comme, par exemple, définir une vitesse cible ....

L'égo-véhicule 102 comporte des organes de propulsions, par exemple thermique ou électrique, et des moyens mettant en œuvre et pilotant ces organes.

Dans un mode de réalisation, ces moyens et organes 103 sont également aptes à mesurer ou à estimer la dynamique de l'égo-véhicule 102, ce qui comprend, sans être limitatif, les angles, les vitesses et les accélérations de rotation du centre de gravité, ou de tout autre point, dudit véhicule et les positions, les vitesses et les accélérations (longitudinale, transversale, verticale) de l'égo véhicule exprimées dans un au moins un repère 106 externe, ou interne, au véhicule.

Dans un mode de réalisation, les moyens et organes 103 comprennent des moyens pour percevoir l'environnement du véhicule. Ces moyens peuvent traiter des ondes lumineuses (caméra, laser, lidar ...), des ondes radio fréquences (RADAR, Wifi, 4G, 5G, xG ...) et des ondes acoustiques (ultrasons, ...). Ces moyens sont configurés pour détecter au moins un véhicule précédant l'égo-véhicule, dit véhicule cible. Ces moyens sont également aptes à déterminer une information de mouvement du véhicule cible comme une position, une vitesse et/ou une accélération absolue ou relative par rapport à l'égo-véhicule 102, associées ou non à des éléments d'identification et de reconnaissance du véhicule cible 102. Les éléments d'identification et de reconnaissance du véhicule cible peuvent être la forme, la plaque minéralogique, ou tous attributs du véhicule cible (classe, ...). Ainsi l'information de mouvement rend possible de différencier, identifier de manière unique, chaque véhicule cible. Sur la figure 1, la double flèche 105 représente une distance entre l'égo-véhicule 102 et un premier véhicule cible 104 qui circule également sur la route 101. Cette distance est, par exemple, la plus courte distance entre le point milieu du parechoc avant de l'égo-véhicule et le point milieu du parechoc arrière du véhicule cible.

Dans un mode de réalisation, les moyens et organes 103 sont aptes à communiquer avec l'extérieur du véhicule (avec d'autres véhicule, avec des objets connectés comme par exemple un téléphone, un ordinateur ..., avec des stations sur le bord de la route, avec des serveurs, ...). En particulier, ces moyens et organes 103 déterminent, selon un autre mode de réalisation, l'information de mouvement du véhicule cible, ledit véhicule cible transmettant à l'égo véhicule l'information de mouvement.

Dans un mode de réalisation, l'égo-véhicule 102 comporte au moins un dispositif, par exemple un calculateur de conduite autonome, apte conduire un véhicule terrestre à moteur par régulation de vitesse adaptative fondée sur une vitesse cible. La régulation de vitesse adaptative peut également se fonder sur une accélération longitudinale cible et/ou une positon cible.

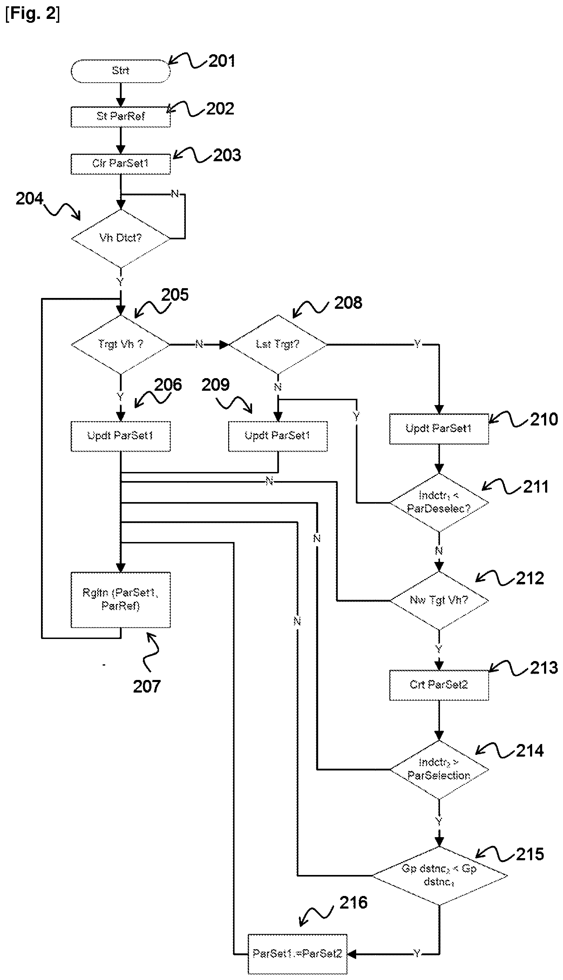

La figure 2 illustre schématiquement un procédé de conduite autonome d'un véhicule terrestre à moteur, appelé égo-véhicule 102, par régulation de vitesse adaptative fondée sur une vitesse cible, selon un exemple particulier de réalisation de la présente invention.

Une étape 201 est une étape de démarrage, Str, ou d'activation de la fonction de régulation de vitesse adaptative.

Une étape 202 définit des données de référence, ParRef comme par exemple une vitesse cible, comprise entre 0 et la vitesse maximale de l'égo-véhicule 102, une limite d'accélération, comprise entre -20 m/s² et 20 m/s², une valeur de désélection, par exemple comprise entre 0 et 0,50, une valeur de sélection, par exemple comprise entre 0,50 et 0,80, une valeur caractérisant un taux de décroissance, par exemple comprise entre 0,01 et 0,1 pour un pas de temps (ou pas d'échantillonnage) de 1 seconde, le pas d'échantillonnage étant généralement compris entre 0,001 et 0,1 secondes. Les valeurs numériques ci-dessus sont données à titre d'illustration et peuvent prendre toutes valeurs positive ou négative possible.

Une étape 203 initialise un jeu de paramètres, ParSet1. Ce jeu de paramètre, ParSet1, peut comprendre, par exemple, une information de mouvement d'un premier véhicule cible 104, une vitesse de l'égo-véhicule 102, un indicateur de pertinence pour le premier véhicule cible 104, un indicateur de détection de perte de détection du premier véhicule cible 104, une durée passée, ou un temps, depuis la dernière détection du véhicule cible lorsqu'on détecte la perte de détection du premier véhicule cible ou depuis la dernière détermination de l'information de mouvement du premier véhicule cible 104, une information de mouvement d'un deuxième véhicule cible, un indicateur de pertinence pour le deuxième véhicule cible, une distance entre l'égo-véhicule 102 et le premier véhicule cible 104, une distance entre l'égo-véhicule et le deuxième véhicule cible, la position/vitesse/accélération courante et/ou passée de l'égo-véhicule 102, etc., et tous autres paramètres utilisés ci-après dans la régulation de vitesse adaptative.

Lors d'une étape 204, on teste si un véhicule cible est détecté. Dans la négative, on reste dans l'étape 204, la régulation de vitesse est établie selon l'état de l'art connu. Dans l'affirmative, on passe à une étape 205.

L'étape 205 teste si le véhicule détecté est le premier véhicule cible 104, Trgt Vh. Dans l'affirmative, on passe à une étape 206. Dans la négative, on passe à une étape 208.

Dans l'étape 206, on a déjà détecté le premier véhicule cible 104 et on continue de le détecter. Cette étape permet de mettre à jour le jeu de paramètres, ParSet1, qui est initialisé dans l'étape 203 décrit ci-dessus, et mis à jour dans l'étape 206 ou une étape 209 décrite ci-après. En particulier, à titre d'illustration non limitative, on détermine l'information de mouvement du premier véhicule cible 104, Trgt Vh, on détermine la vitesse de l'égo-véhicule 102, on calcule un indicateur de pertinence pour le premier véhicule cible 104. Par exemple, l'indicateur de pertinence peut croître et se rapprocher de 1 si le véhicule est détecté plusieurs fois de suite.

Une étape 207 réalise la régulation de vitesse de l'égo-véhicule 102. Elle est aussi l'étape qui suit l'étapes 209 ou une des étapes 212, 214, 215, 216 décrites ci-après. A chaque fois, le jeu de paramètre, ParSet1, a été mis à jour par lors d'une des étapes 206, 209, 212, 214, 215, 216.

L'étape 207 peut comporter plusieurs sous étapes. Par exemple, dans une des sous étapes, on calcule une consigne de conduite autonome fondée sur le jeu de paramètre, ParSet1, et sur les données de référence, ParRef. Ensuite, les moyens et organes 103 sont aptes à mettre en œuvre la régulation de vitesse fondé sur la consigne de conduite autonome (position, vitesse, accélération, ...). Dans un mode de réalisation, sur détection d'une perte de détection du premier véhicule, si l'indicateur de pertinence est supérieur à une valeur de désélection prédéterminée, on calcule une consigne de conduite autonome à partir de l'information de mouvement, de la vitesse cible et de la vitesse de l'égo-véhicule 102. Dans un autre mode opératoire, sur détection d'une perte de détection du premier véhicule, si l'indicateur de pertinence mis à jour est supérieur à une valeur de désélection prédéterminée, on calcule une consigne de conduite autonome à partir de l'information de mouvement, de la vitesse cible et de la vitesse de l'égo-véhicule 102.

On arrive à l'étape 208 si on ne détecte pas le premier véhicule cible 104 lors de l'étape 205. On teste si on détecte la perte de détection du premier véhicule cible 104.Dans la négative, il n'y a pas de précédent premier véhicule cible 104 détecté. On arrive alors dans l'étape 209 qui initialise le jeu de paramètre, ParSet1, tout comme à l'étape 203, et qui détermine les valeurs de tous les paramètres du jeu de paramètres ParSet1. Dans cette étape, le véhicule détecté devient le premier véhicule cible 104. Par exemple, le jeu de paramètre, ParSet1, comprend la détermination d'une information de mouvement d'un premier véhicule cible 104, la détermination d'une vitesse de l'égo-véhicule 102, le calcul d'un indicateur de pertinence, Indctr1, pour le premier véhicule cible 104 configuré pour caractériser une probabilité de présence du premier véhicule cible 104, ... A titre d'illustration, cet indicateur de pertinence, Indctr1, peut pendre :
- une valeur très proche de 1, par exemple 0,9, si plusieurs moyens et organes parmi les organes et moyens 103 ont détecté et identifié ce véhicule ;
- .une valeur comprise entre 0 et 1 et inférieur à la valeur ci-dessus, si le véhicule est détecté par un seul organe.

A 'issue de l'étape 209, on passe dans l'étape 207 qui réalise la régulation de vitesse de l'égo-véhicule 102 telle décrite ci-avant.

Lorsqu'on arrive dans une étape 210, un premier véhicule cible 104 a été détecté et on a déterminé la perte de détection dudit premier véhicule cible 104. On met à jour l'ensemble ou une partie du jeu de paramètre, ParSet1. En particulier, on actualise la détermination de la vitesse de l'égo-véhicule 102, de l'indicateur de pertinence pour le premier véhicule cible 104, Indctr1, et du temps passé depuis la dernière détermination de l'information de mouvement du premier véhicule.

Dans un mode opératoire, la mise à jour de l'indicateur de pertinence est calculée à partir du temps passé depuis la dernière détermination de l'information de mouvement du premier véhicule, le calcul étant fondé sur une fonction polynomiale. Cette fonction polynomiale peut dépendre d'une ou plusieurs indéterminés (arguments). Avantageusement, une des indéterminée est le temps passé depuis la dernière détection.

Dans un autre mode de réalisation, l'indicateur de pertinence décroit d'une valeur prédéterminée caractérisant un taux de décroissance.

Une étape 211 teste si l'indicateur de pertinence est inférieur à la valeur de désélection prédéterminée, ParDeselec. Avantageusement, ce seuil est compris entre 0 et 1, et proche de 0,4. Dans l'affirmative, on passe à l'étape 209 telle que décrite ci-avant.

Dans la négative, on passe à l'étape 212 qui teste si un deuxième véhicule cible est détecté. Dans la négative, on passe à l'étape 207 qui réalise la régulation de vitesse de l'égo-véhicule 102 telle décrite ci-avant avec le jeu de paramètre ParSet1 mis à jour à l'étape 210. Dans l'affirmative, on passe à une étape 213.

On arrive à l'étape 213, si un deuxième véhicule cible a été détecté. Cette étape 213 initialise un nouveau jeu de paramètre, ParSet2, similaire au jeu de paramètre ParSet1. Par exemple, le jeu de paramètre ParSet2 contient :
- une détermination d'une information de mouvement d'un deuxième véhicule cible ;
- un calcul d'un indicateur de pertinence pour le deuxième véhicule cible configuré pour caractériser une probabilité de présence du deuxième véhicule cible. Avantageusement, le calcul est similairement à celui décrit à l'étape 209. ;
- une détermination d'une distance entre l'ego-véhicule et le deuxième véhicule ;
- une détermination d'une distance entre l'ego-véhicule et le premier véhicule.

L'étape 214 suit l'étape 213. Dans l'étape 214, on teste si l'indicateur de pertinence pour le deuxième véhicule cible, Indctr2, est supérieur à la valeur de sélection prédéterminé (voir étape 202). Dans la négative, on passe à l'étape 207 qui réalise la régulation de vitesse de l'égo-véhicule 102 telle décrite ci-avant avec le jeu de paramètre ParSet1 mis à jour à l'étape 210.

Si le test de l'étape 214 est affirmatif, on passe à l'étape 215 qui teste si la distance entre l'ego-véhicule et le deuxième véhicule est plus petite que la distance entre l'ego-véhicule et le premier véhicule. Dans la négative, on passe à l'étape 207 qui réalise la régulation de vitesse de l'égo-véhicule 102 telle décrite ci-avant avec le jeu de paramètre ParSet1 mis à jour à l'étape 210.

Si le test de l'étape 214 est négatif, on passe à l'étape 216, qui remplace le jeu de paramètre, ParSet1, par le nouveau jeu de paramètre, ParSet2. Le deuxième véhicule cible devient maintenant le premier véhicule cible 104. On passe ensuite à l'étape 207 qui réalise la régulation de vitesse de l'égo-véhicule 102 telle décrite ci-avant avec le jeu de paramètres, ParSet1, qui a été remplacé par le jeu de paramètres, ParSet2.

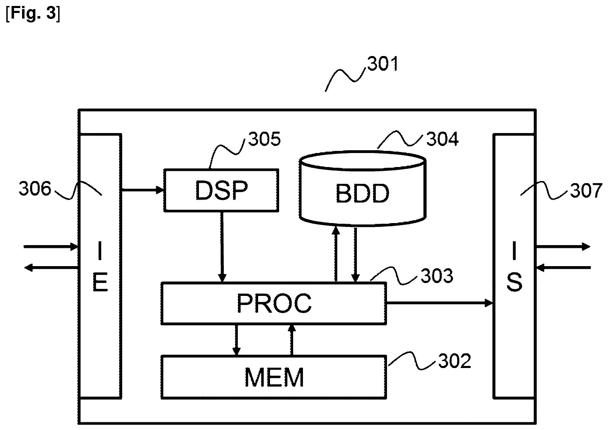

La figure 3 représente un exemple de dispositif 301 compris dans le véhicule, dans un réseau (« cloud ») ou dans un serveur. Ce dispositif 301 peut être utilisé en tant que dispositif centralisé en charge d'au moins certaines étapes du procédé décrit ci-avant en référence à la figure 2. Dans un mode de réalisation, il correspond à un calculateur de conduite autonome.

Dans la présente invention, le dispositif 301 est compris dans le véhicule.

Ce dispositif 301 peut prendre la forme d'un boitier comprenant des circuits imprimés, de tout type d'ordinateur ou encore d'un téléphone mobile (« smartphone »).

Le dispositif 301 comprend une mémoire vive 302 pour stocker des instructions pour la mise en œuvre par un processeur 303 d'au moins une étape du procédé tel que décrit ci-avant. Le dispositif comporte aussi une mémoire de masse 304 pour le stockage de données destinées à être conservées après la mise en œuvre du procédé.

Le dispositif 301 peut en outre comporter un processeur de signal numérique (DSP) 305. Ce DSP 305 reçoit des données pour mettre en forme, démoduler et amplifier, de façon connue en soi ces données.

Le dispositif 301 comporte également une interface d'entrée 306 pour la réception des données mises en œuvre par le procédé selon l'invention et une interface de sortie 307 pour la transmission des données mises en œuvre par le procédé selon l'invention.

La présente invention ne se limite pas aux formes de réalisation décrites ci-avant à titre d'exemples ; elle s'étend à d'autres variantes correspondantes à l'étendue de la protection déterminée par les revendications.

Ainsi, on a décrit ci-avant un mode de réalisation de conduite autonome d'un véhicule terrestre à moteur. Bien sûr, ce mode de réalisation peut s'adapter aux véhicules terrestres à moteur autonome, sans conducteur. Bien entendu, la présente invention ne se limite pas à la forme de réalisation décrite et représentée, mais englobe toute variante variante d'exécution correspondante à l'étendue de la protection déterminée par les revendications.

## Revendications

1. Procédé de conduite autonome d'un véhicule terrestre à moteur, appelé égo-véhicule (102), par régulation de vitesse adaptative fondée sur une vitesse cible, le procédé comportant les étapes de :
• détermination d'une information de mouvement d'un premier véhicule cible (104) ;
• détermination d'une vitesse de l'égo-véhicule (102) ;
• calcul d'un indicateur de pertinence pour le premier véhicule cible (104) configuré pour caractériser une probabilité de présence du premier véhicule cible (104) ;
• sur détection (208) d'une perte de détection du premier véhicule cible (104) et si l'indicateur de pertinence est supérieur à une valeur de désélection prédéterminée, calcul (207) d'une consigne de conduite autonome à partir de l'information de mouvement, de la vitesse cible et de la vitesse de l'égo-véhicule (102) ;
l'étape, sur détection (208) de la perte de détection du premier véhicule cible (104) et si l'indicateur de pertinence est supérieur à la valeur de désélection prédéterminée, de calcul (207) de la consigne de conduite autonome à partir de l'information de mouvement, de la vitesse cible et de la vitesse de l'égo-véhicule (102) comportant les sous-étapes de :
• détection de la perte de détection du premier véhicule cible (104) ;
• mise à jour de l'indicateur de pertinence à partir d'une durée passée depuis la dernière détection du premier véhicule ;
• si l'indicateur de pertinence mis à jour est supérieur à la valeur de désélection prédéterminée, calcul (207) d'une consigne de conduite autonome à partir de l'information de mouvement, de la vitesse cible et de la vitesse de l'égo-véhicule (102) ;
le procédé étant **caractérisé par** les étapes de :
• détermination d'une information de mouvement d'un deuxième véhicule cible ;
• calcul d'un indicateur de pertinence pour le deuxième véhicule cible configuré pour caractériser une probabilité de présence du deuxième véhicule cible ;
• détermination une distance entre l'ego-véhicule et le deuxième véhicule,
• détermination une distance entre l'ego-véhicule et le premier véhicule,
• si l'indicateur de pertinence pour le deuxième véhicule cible est supérieur à une valeur de sélection prédéterminée et si distance entre l'ego-véhicule et le deuxième véhicule est plus petite que la distance entre l'ego-véhicule et le premier véhicule, calcul (207) d'une consigne de conduite autonome à partir de l'information de mouvement du deuxième véhicule de la vitesse cible et de la vitesse de l'égo-véhicule (102).

2. Procédé selon la revendication 1, dans lequel il comporte en outre les étapes de :
• détermination d'une information de mouvement d'un deuxième véhicule cible ;
• calcul d'un indicateur de pertinence pour le deuxième véhicule cible configuré pour caractériser une probabilité de présence du deuxième véhicule cible ;
• si l'indicateur de pertinence pour le deuxième véhicule cible est supérieur à l'indicateur de pertinence mise à jour pour le premier véhicule cible (104), calcul (207) d'une consigne de conduite autonome à partir de l'information de mouvement du deuxième véhicule de la vitesse cible et de la vitesse de l'égo-véhicule (102).

3. Procédé selon l'une des revendication 1 à 2, dans lequel la mise à jour (210) de l'indicateur de pertinence pour le premier véhicule (104) est calculée à partir du temps passé depuis la dernière détermination de l'information de mouvement du premier véhicule, le calcul étant fondé sur une fonction polynomiale.

4. Procédé selon l'une des revendication 1 à 3, dans lequel la mise à jour (210) de l'indicateur de pertinence fait décroitre l'indicateur de pertinence à chaque mise à jour d'une valeur prédéterminée caractérisant un taux de décroissance.

5. Dispositif comprenant une mémoire associée à au moins un processeur configuré pour mettre en œuvre le procédé selon l'une des revendication 1 à 4.

6. Véhicule terrestre à moteur comportant le dispositif selon la revendication 5.

7. Programme d'ordinateur comprenant des instructions adaptées pour l'exécution des étapes du procédé selon l'une des revendications 1 à 4 lorsque ledit programme est exécuté par au moins un processeur configuré pour dispositif selon la revendication 5.

## Patentansprüche

1. Verfahren zum autonomen Fahren eines Landkraftfahrzeugs, genannt Ego-Fahrzeug (102), durch adaptive Geschwindigkeitsregelung auf Basis einer Zielgeschwindigkeit, wobei das Verfahren die folgenden Schritte umfasst:
• Bestimmen von Bewegungsinformationen eines ersten Zielfahrzeugs (104);
• Bestimmen einer Geschwindigkeit des Ego-Fahrzeugs (102);
• Berechnen eines Relevanzindikators für das erste Zielfahrzeug (104), der dazu konfiguriert ist, eine Wahrscheinlichkeit der Anwesenheit des ersten Zielfahrzeugs (104) zu charakterisieren;
• bei Erkennen (208) eines Detektionsverlustes des ersten Zielfahrzeugs (104) und wenn der Relevanzindikator größer als ein vorgegebener Abwahlwert ist, Berechnen (207) einer autonomen Fahranweisung aus den Bewegungsinformationen, der Zielgeschwindigkeit und der Geschwindigkeit des Ego-Fahrzeugs (102);
der Schritt, bei Erkennen (208) des Erkennungsverlusts des ersten Zielfahrzeugs (104) und wenn der Relevanzindikator größer als der vorgegebene Abwahlwert ist, des Berechnens (207) der autonomen Fahranweisung aus den Bewegungsinformationen, der Zielgeschwindigkeit und der Geschwindigkeit des Ego-Fahrzeugs (102), umfassend die folgenden Unterschritte:
• Erkennen eines Erkennungsverlusts des ersten Zielfahrzeugs (104);
• Aktualisieren des Relevanzindikators anhand der seit der letzten Erkennung des ersten Fahrzeugs verstrichenen Zeit;
• wenn der aktualisierte Relevanzindikator größer als der vorgegebene Abwahlwert ist, Berechnung (207) einer autonomen Fahranweisung aus den Bewegungsinformationen, der Zielgeschwindigkeit und der Geschwindigkeit des Ego-Fahrzeugs (102);
wobei das Verfahren durch die folgenden Schritte gekennzeichnet ist:
• Bestimmen von Bewegungsinformationen eines zweiten Zielfahrzeugs;
• Berechnen eines Relevanzindikators für das zweite Zielfahrzeug, der dazu konfiguriert ist, eine Wahrscheinlichkeit der Anwesenheit des zweiten Zielfahrzeugs zu charakterisieren;
• Bestimmen eines Abstands zwischen dem Ego-Fahrzeug und dem zweiten Fahrzeug,
• Bestimmen einer Distanz zwischen dem Ego-Fahrzeug und dem ersten Fahrzeug,
• wenn der Relevanzindikator für das zweite Zielfahrzeug größer als ein vorgegebener Auswahlwert ist und wenn der Abstand zwischen dem Ego-Fahrzeug und dem zweiten Fahrzeug kleiner als der Abstand zwischen dem Ego-Fahrzeug und dem ersten Fahrzeug ist, Berechnen (207) einer autonomen Fahranweisung aus den Bewegungsinformationen des zweiten Fahrzeugs, der Zielgeschwindigkeit und der Geschwindigkeit des Ego-Fahrzeugs (102).

2. Das Verfahren nach Anspruch 1, wobei es weiterhin die folgenden Schritte umfasst:
• Bestimmen von Bewegungsinformationen eines zweiten Zielfahrzeugs;
• Berechnen eines Relevanzindikators für das zweite Zielfahrzeug, der dazu konfiguriert ist, eine Wahrscheinlichkeit der Anwesenheit des zweiten Zielfahrzeugs zu charakterisieren;
• wenn der Relevanzindikator für das zweite Zielfahrzeug größer ist als der aktualisierte Relevanzindikator für das erste Zielfahrzeug (104), Berechnung (207) einer autonomen Fahranweisung aus den Bewegungsinformationen des zweiten Fahrzeugs, der Zielgeschwindigkeit und der Geschwindigkeit des Ego-Fahrzeugs (102).

3. Verfahren nach einem der Ansprüche 1 bis 2, bei dem die Aktualisierung (210) des Relevanzindikators für das erste Fahrzeug (104) aus der seit der letzten Ermittlung der Bewegungsinformationen des ersten Fahrzeugs vergangenen Zeit berechnet wird, wobei der Berechnung eine Polynomfunktion zugrunde liegt.

4. Verfahren nach einem der Ansprüche 1 bis 3, bei dem die Aktualisierung (210) des Relevanzindikators dazu führt, dass der Relevanzindikator bei jeder Aktualisierung um einen vorgegebenen Wert abnimmt, der eine Abnahmerate kennzeichnet.

5. Gerät, das einen Speicher umfasst, der mit mindestens einem Prozessor verbunden ist, der so konfiguriert ist, dass er das Verfahren gemäß einem der Ansprüche 1 bis 4 implementiert.

6. Motorisiertes Landfahrzeug, das die Vorrichtung gemäß Anspruch 5 umfasst.

7. Computerprogramm mit Anweisungen zum Ausführen der Schritte des Verfahrens gemäß einem der Ansprüche 1 bis 4, wenn das Programm von mindestens einem Prozessor ausgeführt wird, der für ein Gerät gemäß Anspruch 5 konfiguriert ist.

## Claims

1. Method for autonomous driving of a land motor vehicle, called ego-vehicle (102), by adaptive speed regulation based on a target speed, the method comprising the steps of:
• determining movement information of a first target vehicle (104);
• determining a speed of the ego-vehicle (102);
• calculating a relevance indicator for the first target vehicle (104) configured to characterize a probability of presence of the first target vehicle (104);
• upon detection (208) of a loss of detection of the first target vehicle (104) and if the relevance indicator is greater than a predetermined deselection value, calculation (207) of an autonomous driving instruction from the movement information, the target speed and the speed of the ego-vehicle (102);
the step, upon detection (208) of the loss of detection of the first target vehicle (104) and if the relevance indicator is greater than the predetermined deselection value, of calculating (207) the autonomous driving instruction from the movement information, the target speed and the speed of the ego-vehicle (102) comprising the sub-steps of:
• detecting loss of detection of the first target vehicle (104);
• updating the relevance indicator from a time elapsed since the last detection of the first vehicle;
• if the updated relevance indicator is greater than the predetermined deselection value, calculation (207) of an autonomous driving instruction from the movement information, the target speed and the speed of the ego-vehicle (102);
the process being **characterized by** the steps of:
• determining movement information of a second target vehicle;
• calculating a relevance indicator for the second target vehicle configured to characterize a probability of presence of the second target vehicle;
• determining a distance between the ego-vehicle and the second vehicle,
• determining a distance between the ego-vehicle and the first vehicle,
• if the relevance indicator for the second target vehicle is greater than a predetermined selection value and if the distance between the ego-vehicle and the second vehicle is smaller than the distance between the ego-vehicle and the first vehicle, calculating (207) an autonomous driving instruction from the movement information of the second vehicle, the target speed and the speed of the ego-vehicle (102).

2. The method of claim 1, wherein it further comprises the steps of:
• determining movement information of a second target vehicle;
• calculating a relevance indicator for the second target vehicle configured to characterize a probability of presence of the second target vehicle;
• if the relevance indicator for the second target vehicle is greater than the updated relevance indicator for the first target vehicle (104), calculation (207) of an autonomous driving instruction from the movement information of the second vehicle, the target speed and the speed of the ego-vehicle (102).

3. Method according to one of claims 1 to 2, in which the update (210) of the relevance indicator for the first vehicle (104) is calculated from the time elapsed since the last determination of the movement information of the first vehicle, the calculation being based on a polynomial function.

4. Method according to one of claims 1 to 3, in which the updating (210) of the relevance indicator causes the relevance indicator to decrease at each update by a predetermined value characterizing a rate of decrease.

5. Device comprising a memory associated with at least one processor configured to implement the method according to one of claims 1 to 4.

6. Motor land vehicle comprising the device according to claim 5.

7. Computer program comprising instructions adapted for executing the steps of the method according to one of claims 1 to 4 when said program is executed by at least one processor configured for a device according to claim 5.
